# EUROPEAN PATENT SPECIFICATION

(11) **EP 2 887 501 B1**
(45) Date of publication and mention of the grant of the patent: **06.04.2016**
(21) Application number: 13198015.3
(22) Date of filing: 18.12.2013
(51) Int. Cl.: H02K 1/27, H02K 15/03, H02K 1/04, H02K 7/18

(54) **Manufacturing a generator rotor**
Herstellung eines Generatorrotors
Fabrication d'un rotor de générateur

(43) Date of publication of application: 24.06.2015
(73) Proprietor: Siemens Aktiengesellschaft, 80333 München (DE)
(72) Inventor: Rasmussen, Morten Pilgaard, 7100 Vejle (DK)

(56) References cited:
- EP-A1- 2 113 986
- WO-A1-2011/107168
- WO-A2-2012/156103
- DE-A1-102008 005 072
- US-A1- 2002 158 532
- US-A1- 2004 140 725

## Description

### Field of invention

The present invention relates to a method and an arrangement for manufacturing an outer rotor for an electrical generator and to an outer rotor for an electrical generator.

### Art Background

An electrical generator may be used in a wind turbine, wherein plural rotor blades drive a shaft which is connected to the rotor of the electrical generator, the rotor rotating relative to a stator comprising one or more windings. In particular, the generator may comprise a rotor having permanent magnets. In particular, the wind turbine may comprise a direct drive generator, i.e. a generator having a rotor which is connected to the same shaft to which plural rotor blades are connected. Such wind turbines thus do not comprise a gearbox for transforming a rotational speed of a main shaft having the plural rotor blades connected to it to a secondary shaft which is mechanically connected and rotating (as a rotor) within the generator. Thereby, the generators may comprise an inner rotor and an outer stator or an outer rotor and inner stator. The rotor carries the magnets, in particular electromagnets or permanent magnets. The stator may comprise plural windings in which electrical voltage is induced upon rotation of the rotor carrying the magnets. Between the stator and the rotor magnets, a small air gap is provided to allow magnetic flux from the permanent magnets or electromagnets to induce a voltage in the stator windings.

From the document US 2011/0271519 a manufacturing method for manufacturing a rotor for a generator is known, wherein a metal plate is rolled to a circumferentially open circular cylinder having two free ends. The two free ends of the rolled metal plate are then welded to form a closed cylinder which is then rolled to obtain the desired end diameter of the rotor.

Document US 2002/0158532 A1 discloses a method of manufacturing a magneto-generator, wherein a resin molding die having an outer peripheral surface to be positioned in opposition to an inner peripheral surface of a flywheel and projections provided in the outer peripheral surface for holding a plurality of magnets at predetermined positions is used.

Document EP 2 113 986 A1 discloses a method for encapsulating permanent magnets of a rotor of a generator comprising placing a number of permanent magnets on the outside of the rotor yoke, placing spacers of a non-magnetic material between the permanent magnets, placing end barriers on the free portions of the rotor yoke, folding a thin sheet of a non-magnetic material around the permanent magnets and the spacers, placing an airtight membrane on the outside of the sheet, applying vacuum to the airtight enclosure and infusing resin into the airtight enclosure.

Document WO 2011/107168 A1 discloses a method of attaching a magnet to a rotor which includes arranging a magnet along a surface of the rotor, arranging a pair of retainers one on each side of the magnet, enclosing the rotor in a vacuum bag and performing vacuum evacuation to consolidate the magnet to the retainers by means of adhesive.

Document DE 10 2008 005 072 A1 discloses a method for fixing magnets in a cylinder, wherein a support arrangement having an outer surface is deposited with magnets, wherein a solidifiable fluid is arranged between the support structure and the magnets, wherein the support arrangement is removed after solidifying the fluid.

Document WO 2012/156103 A2 discloses a permanent-magnet electric machine, wherein the rotor is provided with permanent magnet elements and an air gap is formed between the stator and the rotor, wherein the rotor has a rotor bell, which has a plurality of layers of resin-fibre composite material, is an integral body having a rotor tube and a rotor base and has at least one filament bundle in the region of the rotor base.

Nowadays, wind turbine generators become larger and larger thereby also delivering higher power yield. Thereby, also the diameter of the generators and thereby the rotors increases, in order to obtain the desired power output from the generator. This in turn may require larger and larger manufacturing equipment including the rolling machinery, in order to manufacture the rotors. This machinery may be very expensive and at present there may be limits in relation to which rotor diameters the rolling machinery can handle. Even further problems may be related to the very expensive and time-consuming step of post-processing the rolled rotor yoke to provide for example magnet slots. Thus, conventional methods are also very complex and require a number of processing and manufacturing steps.

There may be a need for a method and for an arrangement for manufacturing an outer rotor for an electrical generator and there may also be a need for an outer rotor for an electrical generator, wherein the manufacturing process is simpler and more cost effective compared to conventional methods and wherein the manufactured outer rotor has an accurately defined geometry and has sufficient stability and strength in order to satisfy requirements for usage in an electrical generator, in particular comprised in a wind turbine.

### Summary of the Invention

The need is satisfied by the subject-matter of the independent claims which are directed to a method for manufacturing an outer rotor for an electrical generator, to an arrangement for manufacturing an outer rotor for an electrical generator and directed also to an outer rotor for an electrical generator which may in particular be included in an electrical generator of a wind turbine. Advantageous embodiments of the present invention are described by the dependent claims.

According to an embodiment of the present invention, it is provided a method for manufacturing an outer rotor for an electrical generator, the method comprising releasably attaching plural magnets (directly or indirectly) at a annular (in particular circular or cylindrical) auxiliary structure so that radially inner surfaces of the magnets are aligned to comply with an intended inner diameter of the rotor; applying a bonding material at least in contact with radially outer surfaces of the magnets and circumferentially between magnets, in order to fix the aligned magnets in place (in particular relative to each other). Thereby, the bonding material comprises composite material including a resin and fiber material, wherein the fiber material is applied between an auxiliary structure radially outer surface and the radially inner surfaces of the magnets as radially inner fiber material, wherein the fiber material is applied on the radially outer surfaces of the magnets as radially outer fiber material.

The outer rotor manufactured by the method may be suitable for an electrical generator (in particular of a wind turbine) having an inner stator. In particular, the completed rotor may have an inner diameter (i.e. the distance between opposite radially inner surfaces of the magnets) between 3 m and 10 m, in particular between 4 m and 7 m. Thereby, the outer rotor may be suitable for electrical generators of a wind turbine. The magnets may comprise electromagnets or in particular may comprise permanent magnets comprising ferromagnetic material which has been magnetized such that the permanent magnets generate a permanent magnetic field without being driven by an electric current. The plural magnets may in particular arranged at an auxiliary structure radially outer surface of the annular auxiliary structure such that they are circumferentially equally spaced apart from each other around the whole circumference of the auxiliary structure. In particular, the radially inner surface of each of the magnets may have a (circumferential) width of between 30 mm and 100 mm, in particular around 50 mm. Furthermore, a circumferential distance between adjacent magnets may be between 30 mm and 100 mm, in particular about 50 mm.

All magnets to be included in the outer rotor when the outer rotor is ready to be used as a rotor of the electrical generator may be releasably attached at the auxiliary structure. The releasably attaching the plural magnets may comprise or involve applying an adhesive between the radially inner surfaces of the magnets and the auxiliary structure radially outer surface and/or clamping (or pressing) side surfaces of the magnets in recesses of the auxiliary structure (in particular at the auxiliary structure radially outer surface) or may involve other attaching means and processes. Furthermore, also screws or other attaching means may be utilized to releasably attach the magnets to the auxiliary structure. Releasably attaching may allow releasing the auxiliary structure from the plural magnets after the manufacturing is completed. For example, the auxiliary structure may be withdrawn or removed from the plural magnets being connected or bonded to each other by the bonding material (in between the magnets and around the magnets).

In particular, during manufacturing, the plural magnets may be directly or indirectly releasably attached at the circular auxiliary structure. For example, between the auxiliary structure radially outer surface and the radially inner surface of the magnet, a radially inner sheet (for forming a bag which can be evacuated) and one or more layers of fiber material may be present, according to particular embodiments of the present invention. According to other embodiments of the present invention, between the radially inner surfaces of the magnets and the auxiliary structure radially outer surface, no inner sheet may be present but one or more layers of fiber material may be present.

According to the embodiment comprising at least fiber material between the radially inner surfaces of the magnets and the auxiliary structure radially outer surface, the bonding material (in particular comprising beside the fiber material also resin) may be present around or on the radially outer surfaces of the magnets as well as on or around the radially inner surfaces of the magnets. Thereby, a still higher strength and stability of the completed rotor may be achieved.

The auxiliary structure may comprise one or more materials, such as metal, wood, plastic and may in particular comprise a framework of bars or rods which are screwed (in particular to form movable joints or hinges) and/or welded to each other to form in particular a cylindrical shape. The auxiliary structure may occasionally also be referred to as fixture for fixing the plural magnets. Thus, the auxiliary structure may be adapted such that the plural magnets may be releasably attached thereon such that they are arranged in a cylindrical fashion around a whole circumference of the auxiliary structure.

Applying the bonding material may involve or comprise a moulding process, in particular a vacuum assisted resin transfer moulding (VARTM) process and also in particular comprising applying fiber material on the radially outer surfaces and/or radially inner surfaces of the magnets and circumferentially between adjacent magnets. According to other embodiments, a moulding process may be applied without applying a vacuum. The bonding material may be applied such that the bonding material is present along the whole circumference of the completed rotor. Thereby, the bonding material may (at least partially) embed the magnets. In particular, when applying the bonding material, the bonding material may be in a state, where it can change its shape, in particular a state where it is liquid such that it can be distributed by pouring or sweeping for example. According to an embodiment of the present invention, the rotor construction is built in a composite material, e.g. using a VARTM casting process. The composite material may comprise, beside resin, glass fiber, carbon fiber or a combination of the two.

According to an embodiment of the present invention, the bonding material is applied such as to surround the radially outer surfaces and the radial inner surfaces of the magnets.

When the radially outer surfaces as well as the radially inner surfaces are surrounded using the bonding material (in particular using a fiber material and a resin), the stability and strength of the completed outer rotor may be increased. Furthermore, an intended geometry and dimension and orientation and arrangement of the magnet may be accurately maintained during operation in an electrical generator.

According to an embodiment of the present invention, the bonding material comprises composite material including a resin and fiber material (e.g. in form of mats or mesh or fabric), in particular glass fiber and/or carbon fiber material.

In particular, the fiber material may first be applied when applying the bonding material and then the resin may be applied on the fiber material. Thereby, conventional materials may be utilized which provide a sufficient strength and stability, when manufacturing the outer rotor is completed. According to a particular embodiment, the bonding material may not comprise composite material, in particular may not comprise fiber material but only resin, in particular in situations, where the requirements of the stability are less stringent. Also the resin may be pre-mixed with fiber material such that resin and fiber material in applied in combination to the magnets in a single process.

According to an embodiment of the present invention, the radially outer surfaces of the magnets are at a greater radial position than an auxiliary structure radially outer surface circumferentially between adjacent magnets.

Thus, the magnets may protrude radially outwards when placed at the auxiliary structure. Thereby the radially outer surfaces of the magnets and/or also portions of side surfaces of the magnets may be exposed such that they may effectively be covered with bonding material.

When releasably attached to the auxiliary structure, the plural magnets protrude (radially outwards) from the auxiliary structure radially outer surface circumferentially between adjacent magnets.

According to an embodiment of the present invention, the radially inner surfaces of the magnets are at a smaller radial position than the auxiliary structure radially outer surface circumferentially between adjacent magnets.

According to this embodiment of the present invention, the auxiliary structure may comprise grooves or recesses at the auxiliary structure radially outer surface in which recesses the magnets may be accompanied and may be releasably attached, for example by clamping the magnets within the recesses. Thereby, releasably attaching the plural magnets may be simplified. In other words, the auxiliary structure may comprise at circumferential positions where magnets are to be placed recesses for the respective magnets. Thereby, a radial position of the auxiliary structure radially outer surface at circumferential position where magnets are to be placed may be selected to comply (approximately) with the intended inner diameter of the rotor. Thereby, the intended geometry of the rotor may be achieved in a more accurate manner.

Thereby, the magnets may be accurately held in place complying with the intended inner diameter of the rotor.

According to an embodiment of the present invention, the fiber material is applied between the auxiliary structure radially outer surface and the radially inner surfaces of the magnets as radially inner fiber material, wherein the fiber material is applied on the radially outer surfaces of the magnets as radially outer fiber material.

By applying the fiber material on the radially outer surfaces as well as on the radially inner surfaces of the magnets (and e.g also at side surfaces of the magnets), the magnets are (at least partially surrounded by the fiber material which (in particular after applying resin to the fiber material) may improve the stability of the completed outer rotor.

According to an embodiment of the present invention, the radially outer fiber material extends in a circumferential direction beyond the outer surface of the magnets as extended radially outer fiber material, wherein the radially inner fiber material extends in the circumferential direction beyond the radially inner surfaces of the magnets as extended radially inner fiber material, wherein the extended radially outer fiber material and the extended radially inner fiber material are stacked on top of each other circumferentially between adjacent magnets.

In particular, the extended radially outer fiber material and the extended radially inner fiber material may thereby firmly be joined between adjacent magnets and may thereby provide a high stability (when solidified or hardened). In particular, the extended radially outer fiber material and the extended radially inner fiber material may be layered in a smooth manner without folding and without comprising air bubbles or trapped air (in particular when the resin is applied).

According to an embodiment of the present invention, applying the bonding material comprises soaking (or wetting or sweeping) the radially outer fiber material, the radially inner fiber material and the extended radially outer fiber material stacked with the extended radially inner fiber material with resin, the method in particular further comprising crosslinking the resin for solidification. The fiber material (placed at plural locations) may thereby be wetted or surrounded or immersed into the resin material, in particular avoiding trapping air and avoiding air bubbles. For crosslinking the resin (in order to form polymers), a crosslinking agent may be added to the resin (e.g. expoxy resin) shortly before applying the resin on or to the already layered or applied fiber material. After soaking the fiber material, a vacuum may be applied in order to remove residual air or air bubbles. In other embodiments, no vacuum may be applied and the resin may crosslink for example in ambient conditions, such as ambient normal atmospheric pressure.

According to an embodiment of the present invention, as an outer bonding material retaining structure an outer sheet is arranged on the radially outer surfaces of the magnets, in particular on the radially outer fiber material. The outer sheet may later on form a portion of a bag which may then (after applying the bonding material, in particular after applying the fiber material and applying the resin) evacuated, in order to improve a resin moulding process, in particular in order to perform a vacuum assisted resin transfer moulding process (VARTM).

According to an embodiment of the present invention, as an inner bonding material retaining structure an inner sheet is arranged between the radially inner fiber material and the auxiliary structure radially outer surface. The outer bonding material retaining structure may allow retaining the bonding material (in particular the resin) such that the bonding material is forced to stay in contact with the inner surfaces of the magnets. The inner sheet may form a portion of the bag (formed together with the outer sheet) for containing the entire bonding material and containing all magnets. Thus, when the outer sheet and the inner sheet is closed, all the permanent magnets including the applied bonding material is contained within the inside of the (e.g. annular) bag. The bag may then be evacuated (using a vacuum pump for removing air or other gases from the inside of the bag), in order to remove residual gas and air and in order to improve the resin moulding process.

According to this embodiment of the present invention, the inner sheet can be dispensed with, since the auxiliary structure radially outer surface prohibits leakage of the bonding material (in particular the resin) and effectively contains the bonding material (in particular the resin) between the auxiliary structure radially outer surface and the outer sheet. Thereby, in particular the auxiliary structure radially outer surface may form in this embodiment a continuous solid and bonding material tight surface. Thus, according to this embodiment, the bonding material (in particular the resin soaked into the fiber material) may be in direct contact with the auxiliary structure radially outer surface. Thereby, the inner sheet may be dispensed with thereby simplifying the manufacturing process.

According to an embodiment of the present invention, the auxiliary structure outer surface comprises recesses or channels (e.g. at circumferential positions where magnets are to be placed and/or at circumferential positions between magnets to be placed) where vacuum can be applied.

The recesses and channels may allow more effective evacuation of the inside of the bag when the outer sheet is joined with the auxiliary structure radially outer surface (for example at axial end portions of the auxiliary structure). Thereby, removal or reduction of residual gas or air within the bag may be improved.

According to an embodiment of the present invention, applying a bonding material comprises partially tightly joining the inner bonding material retaining structure and outer bonding material retaining structure to form a bag; filling an inside of the bag with resin; completely tightly joining the inner bonding material retaining structure and outer bonding material retaining structure to close the bag; and evacuating the inside of the bag, in particular using the recesses or channels. The method may further comprise removing the auxiliary structure, in particular collapsing the auxiliary structure using a hydraulic mechanism.

Thereby, a VARTM process may be performed. Removing the auxiliary structure may also be performed in other embodiments which do not utilize a bag.

The inner bonding material retaining structure and the outer bonding material retaining structure may for example be joined at axial end portions or positions of the auxiliary structure. The thereby formed bag may substantially comprise an annular shape accompanying all the magnets and the entire bonding material (in particular including the fiber material and the resin). The filling the bag may even comprise at least partially applying resin to the fiber material while the bag is not yet formed, when for example the outer sheet is still missing. The closed bag may comprise one or more ports or connectors or openings to which evacuation lines may be connected which evacuation lines may be connected to a vacuum pump.

The collapsing the auxiliary structure may comprise reducing the dimension or extension or diameter of the auxiliary structure such that it can be withdrawn from the completed rotor. The resin may solidify and may thus become rigid and solid (in particular after having added some crosslinking agent and having elapsed a particular crosslinking time). Furthermore, heat may be applied in order to accelerate the crosslinking process and thus the solidification.

It should be understood that features individually or in any combination disclosed, described, employed or mentioned in respect of a method for manufacturing an outer rotor may also be applied, individually or in any combination, to an arrangement for manufacturing an outer rotor according to an embodiment of the present invention and vice versa.

According to an embodiment of the present invention, it is provided an arrangement for manufacturing an outer rotor for an electrical generator, the arrangement comprising an annular auxiliary structure to which plural magnets (directly or indirectly) are releasably attachable so that radially inner surfaces of the magnets are aligned to comply with an intended inner diameter of the rotor; a bonding material comprising composite material including a resin and fiber material, the circular auxiliary structure being adapted such that a bonding material can be applied at least in contact with radially outer surfaces of the magnets and circumferentially between magnets, in order to fix the aligned magnets in place, wherein the fiber material is applied between an auxiliary structure radially outer surface and the radially inner surfaces of the magnets as radially inner fiber material, wherein the fiber material is applied on the radially outer surfaces of the magnets as radially outer fiber material.

The arrangement may be adapted to perform a method for manufacturing an outer rotor according to an embodiment of the present invention.

The arrangement may in particular further comprise the bonding material, in particular comprising fiber material and resin. Furthermore, the arrangement may comprise an outer sheet (and in particular also an inner sheet) for forming a bag accompanying the magnets and the bonding material. Furthermore, the arrangement may comprise one or more vacuum pumps and respective tubing or evacuation lines connected to an inside of the bag. The inner sheet and the outer sheet may comprise plastic, a foil or any other flexible resin tight material.

According to an embodiment of the present invention, it is provided an outer rotor for an electrical generator, the rotor comprising plural magnets having radially inner surfaces of the magnets that are annularly aligned to comply with an intended inner diameter of the rotor; a bonding material applied at least in contact with radially outer surfaces of the magnets and circumferentially between magnets, in order to fix the aligned magnets in place, wherein the bonding material comprises composite material including a resin and fiber material, wherein the fiber material is applied on the radially inner surfaces of the magnets as radially inner fiber material, wherein the fiber material is applied on the radially outer surfaces of the magnets as radially outer fiber material.

The outer rotor may be manufactured according to a method for manufacturing an outer rotor according to embodiments of the present invention, in particular using an arrangement for manufacturing an outer rotor according to an embodiment of the present invention.

Thereby, in particular the plural magnets may comprise or be permanent magnets. In particular, the permanent magnets may comprise magnetized ferromagnetic material in an inside and may be encapsulated by stainless steel, in order to reduce corrosion and/or to protect the magnetized ferromagnetic material.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates an arrangement for manufacturing an outer rotor for an electrical generator according to an embodiment of the present invention which is adapted to be used in a method for manufacturing an outer rotor according to an embodiment of the present invention;
Fig. 2 schematically illustrates a cross-sectional view of a portion of an arrangement for manufacturing an outer rotor according to an embodiment of the present invention;
Fig. 3 schematically illustrates an arrangement for manufacturing an outer rotor including a fixation of a permanent magnet using an arrangement for manufacturing an outer rotor according to an embodiment of the present invention;
Fig. 4 schematically illustrates a cross-sectional view of an arrangement for manufacturing an outer rotor when a permanent magnet is releasably attached and bonding material is applied; and
Fig. 5 schematically illustrates a cross-sectional view of an arrangement for manufacturing an outer rotor according to an embodiment of the present invention, when a permanent magnet is releasably attached and bonding material is applied.

### Detailed Description

The illustration in the drawings is in schematic form. It is noted that in different figures, similar or identical elements are provided with the same reference signs or with reference signs, which are different from the corresponding reference signs only within the first digit.

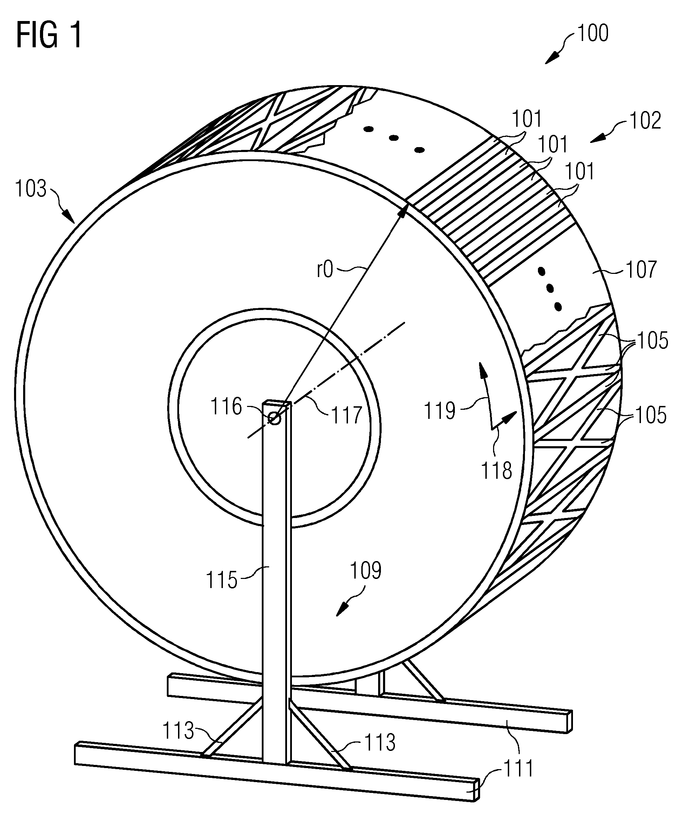

Fig. 1 illustrates a schematic perspective view of an arrangement 100 for manufacturing an outer rotor for an electrical generator according to an embodiment of the present invention in a state where already some permanent magnets 101 are releasably attached to the arrangement for manufacturing an outer rotor. The arrangement for manufacturing an outer rotor comprises a circular auxiliary structure 103 to which plural magnets are releasably attachable so that in Fig. 1 not visible radially inner surfaces of the magnets 101 are aligned to comply with an intended inner diameter of the rotor corresponding to two times an intended inner radius r0, as is illustrated in Fig. 1.

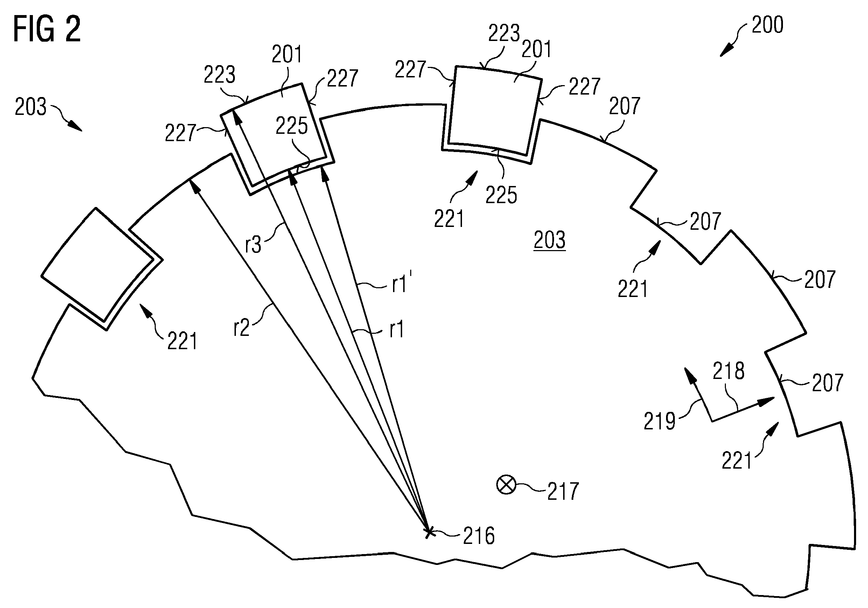

The annular (in particular cylindrical) auxiliary structure 103 comprises rods and bars 105 which are connected with each other (for example using screws, adhesives or the like) in order to form a frame onto which a smooth or stepped outer surface 107 is formed which provides contact surface for the plural magnets 101 such as to allow releasably attachment of the plural magnets to the auxiliary structure radially outer surface 107. The auxiliary structure radially outer surface 107 has in the embodiment illustrated in Fig. 1 a cylindrical shape without any recesses. In other embodiments, such as in embodiments illustrated in Figs. 2, 3, 4 and 5, the auxiliary structure radially outer surface 107 may comprise recesses in which the plural magnets may be accompanied. The auxiliary structure 103 is supported by a support structure 109 comprising a base 111 and bars 113, 115. In particular, the support structure 109 holds the auxiliary structure 103 using an axis 117 corresponding to an axis of the outer rotor to be manufactured using the auxiliary structure 103. By the bars or rods 105, a fixture support structure is assembled supporting the auxiliary structure radially outer surface 107 to which the plural magnets 101 may releasably be attached. In Fig. 1, only a portion of the magnets intended to be attached to the auxiliary structure 103 are illustrated. When manufacturing the outer rotor, all permanent magnets 101 intended to be comprised in the to be manufactured rotor may then be releasably attached to the auxiliary structure radially outer surface 107 of the auxiliary structure 103.

In Fig. 1, furthermore a radial direction 118 (also denoted as r) and a circumferential direction 119 (also denoted by the angle θ) as well as an axial direction 117 (corresponding to the rotor axis and perpendicular to the radial direction 117 and perpendicular to the circumferential direction 119) are indicated.

Fig. 2 schematically illustrates a cross-sectional (cut perpendicular to the axial direction) view (viewed in the axial direction 217) of a portion of an arrangement 200 for manufacturing an outer rotor of a generator according to an embodiment of the present invention. The arrangement 200 comprises an annular auxiliary structure 203 comprising an auxiliary structure radially outer surface 207. For the sake of clarity, the fixture structure including bars and rods is not illustrated in Fig. 2 but supports the radially outer surface 207 of the auxiliary structure 203. As an example, two permanent magnets 201 are illustrated in Fig. 2 being releasably attached to the auxiliary structure 203. In particular, for this purpose, the auxiliary structure radially outer surface 207 comprises recesses 221 at circumferential positions where permanent magnets are to be releasably attached. Thereby, the radius r1' of the auxiliary structure reaching from the central point 216 (through which the rotor axis or auxiliary structure axis runs) to the auxiliary structure radially outer surface 207 of the recesses 221 is smaller than the radius r2 of the auxiliary structure 203 extending from the central point 216 to the auxiliary structure radially outer surface 207 between adjacent magnets 201.

In the illustration of Fig. 2, bonding material has not been illustrated, as the illustration of Fig. 2 is focused on the geometry of the auxiliary structure 203 and the manner of placement of the permanent magnets 201. However, when the auxiliary structure 203 is used in a manufacturing process to manufacture an outer rotor, bonding material will be applied at least in contact with radially outer surfaces 223 of the permanent magnets 201 and circumferentially between the permanent magnets 201. Furthermore, bonding material may also be applied on radially inner surfaces 225 of the magnets 201 and partially also on side surfaces 227 of the permanent magnets 201, as will be described in further detail with reference to Figs. 2, 4 and 5. As can be taken from Fig. 2, the radially outer surfaces 223 of the magnets 201 are at a greater radial position (i.e. r3) than the auxiliary structure radially outer surface (being positioned at the radius r2) circumferentially between the adjacent magnets 201. Furthermore, as can be taken from Fig. 2, the radially inner surfaces 225 of the magnets 201 are at a smaller radial position (i.e. positioned at radius r1) than the auxiliary structure radially outer surface circumferentially between adjacent magnets (positioned at radius r2). Thereby, the magnets 201 may firmly but releasably hold within the recesses 221 during the manufacturing process, in order to position the magnets 201 for an intended radius of the rotor which may be the radius r1 (or a radius slightly smaller than r1 since additional bonding material may be applied onto the radially inner surfaces 225 of the magnets 201, such that an intended radius r0 or r1' of the rotor may result after completion of the manufacturing method).

The circumferential direction 219 and the radial direction 218 is also illustrated in Fig. 2.

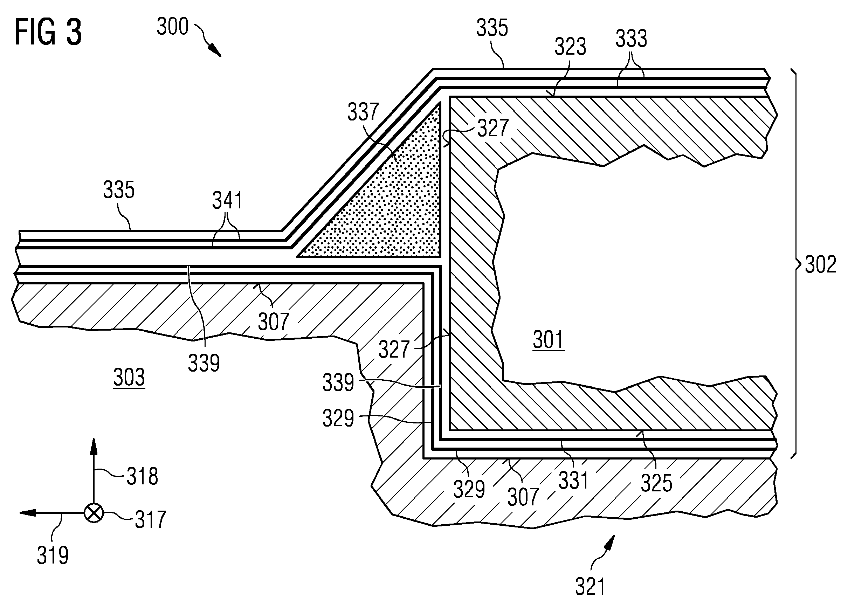

Fig. 3 schematically illustrates a cross-sectional view (viewed along the axial direction 317) of an arrangement 300 for manufacturing an outer rotor according to an embodiment of the present invention. In a recess 321 of the auxiliary structure outer surface 307, a permanent magnet 301 is accompanied. The axial direction 317, the radial direction 318 and also the circumferential direction 319 are indicated in Fig. 3. The arrangement 300 is illustrated in a stage during manufacturing an outer rotor. Thereby, the arrangement 300 for manufacturing the outer rotor may be prepared to hold the magnets 301 during the manufacturing process in a precise circular circumferential position with a precise inner diameter (for example the diameter r1 illustrated in Fig. 2) as prescribed for the rotor. Further, the arrangement 300 is in the embodiment illustrated in Fig. 3 suitable to hold vacuum bags and fiber material while building and casting the rotor.

Before placing the permanent magnet into the recess 321, first an inner sheet 329 is placed within the recess 321 on the auxiliary structure radially outer surface 307 and also on this auxiliary structure radially outer surface 307 in circumferential regions where no permanent magnets 301 are to be placed. On the inner sheet 329 then one or more layers of fiber material 331 are placed to cover the inner sheet 329. The inner sheet 329 may serve as a portion of a vacuum bag on the outer surface 307 of the auxiliary structure or arrangement 300 for manufacturing a rotor. The fiber material or fiber layers 321 may establish one or more inner layers of fiber material or inner sheet 329 of said inner vacuum bag. Thereby, the fiber material 331 may be positioned for example by laying out fiber mats on the outer surface 307 (on top of the inner sheet 329) or by filament winding.

After having placed the inner sheet 329 and the radially inner fiber material 331 on top of the inner sheet 329, the permanent magnets 301 may be placed on the radially inner fiber material 331 (i.e. fiber material which is placed at least on the radially inner surfaces 325 of the permanent magnets 301). Thereby, the permanent magnets 301 are placed on the radially inner fiber material 331 in their correct or intended positions relative to the arrangement 300 (in particular the auxiliary structure radially outer surface 307) and relative to their desired positions for the completed outer rotor. Thereby, the magnets 301 may be magnetized or demagnetized.

After having placed the magnets 301 in their for the completed outer rotor intended positions, one or more layers of radially outer fiber material 333 is placed on the radially outer surfaces 323 of the magnets 301 and potentially partially also on portions of the side surfaces 327 of the magnets 301. Thereby, the radially outer fiber material 333 may for example be positioned by laying out fiber mats on the radially outer surface 323 or by filament winding.

As a next step in the manufacturing process, an outer sheet 335 (serving as a portion of the vacuum bag) is placed on top of the radially outer fiber material 333 to build up the construction. In particular, the outer sheet 335 may then be joined with the inner sheet 329 to form a bag. Before placing the outer sheet 335, the fiber materials, i.e. the radially outer fiber material 333 and also the radially inner fiber material 331 may at least in part have been soaked or wetted or applied with resin. In other embodiments, the resin is applied after the bag comprising the inner sheet 329 and the outer sheet 335 has been (e.g. partially) closed. According to other embodiments, resin may be applied while the bag is still open.

After having applied the resin 337 in particular illustrated in a region beside a side surface 327 of the magnet 301, the bag is then closed, in order to contain the magnets 301, the radially inner fiber material 331, the radially outer fiber material 333 and the resin 337 therein. Afterwards, the inside of the bag is evacuated, in order to perform a VARTM process for casting the rotor. Although not explicitly illustrated in Fig. 3, the resin material 337 is also contained on or soaking the fiber materials 331 and 333.

In a circumferential region where a permanent magnet 301 is not to be placed, extended radially inner fiber material 339 joins with extended radially outer fiber material 341 which forms an extension of the radially outer fiber material 333. Further, the extended radially inner fiber material 329 forms an extension of the radially inner fiber material 331.

The manufacturing method and manufacturing arrangement may be new in that a similar wind turbine generator construction and method of manufacturing may not be known from the prior art. Embodiments of the present invention may be advantageous in that fixtures and thereby rotors may be constructed to a relatively large diameter, such as up to 10 m diameter without the limitation of rolling equipment conventionally required for manufacturing. Furthermore, embodiments of the present invention may be advantageous in that the manufacturing the rotor and establishing the magnets may be done in a single process step. This may be both time- and cost-effective.

Furthermore, embodiments of the present invention may be advantageous in that the manufactured rotor may require little or may not require post-processing after casting. Furthermore, by a particular selection of the fiber material type to be used (uni-directional, bi-axial, carbon, glass fiber, Kevlar, etc.), the rotor may be designed to accommodate or to satisfy the various physical requirements set up for the rotor, such as load in the different directions, torsional loads, generation of noise, stiffness, weight, etc.

Furthermore, embodiments of the present invention may be advantageous in that they may minimize bearing current related to the capacitive coupling between rotor and stator and even further with lightning currents flowing from hub to stator via capacitive coupling from rotor to stator. These advantages may be achieved by using an electrically nonconductive material for constructing the rotor.

When completed the outer rotor 302 is manufactured.

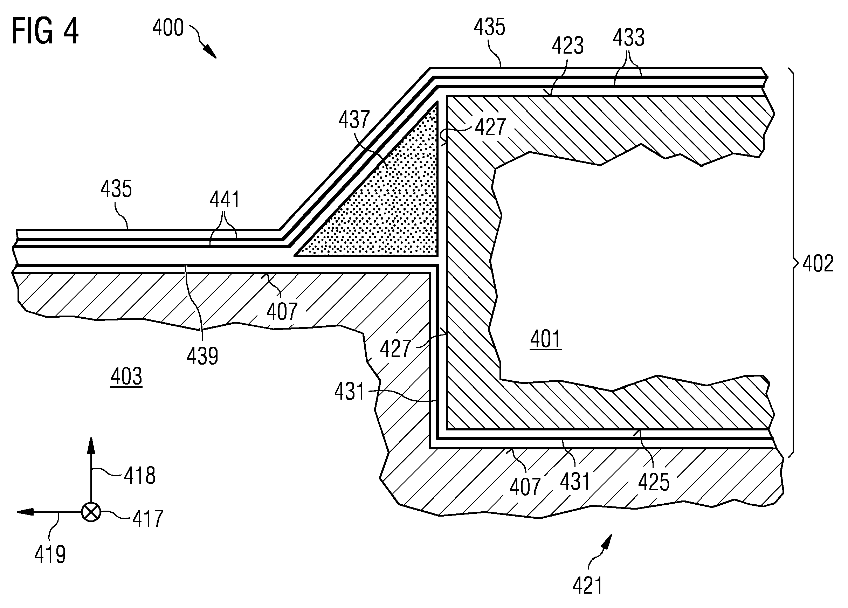

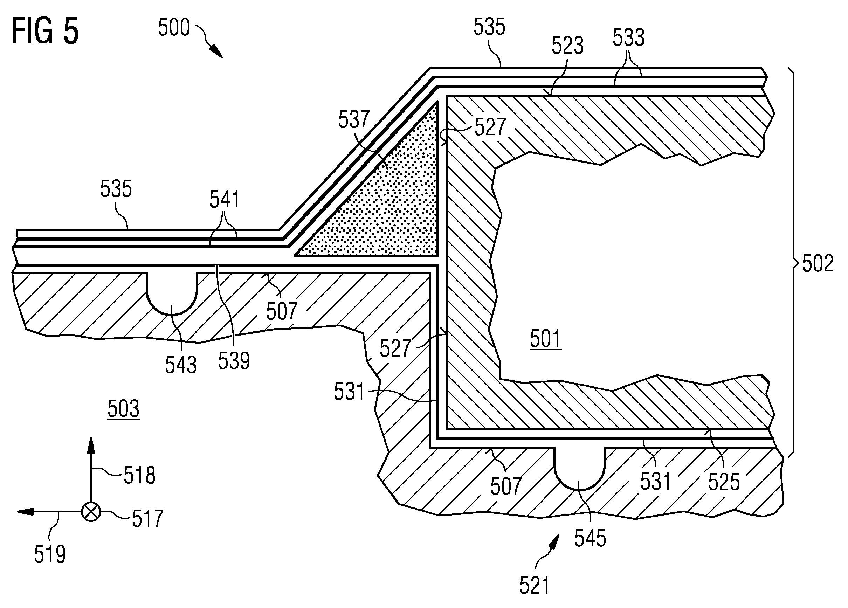

Figs. 4 and 5 schematically illustrate cross-sectional views along the axial direction of a portion of other arrangements 400 and 500, respectively for manufacturing an outer rotor for a generator according to embodiments of the present invention. It should be noted that elements similar in structure and/or function to other elements illustrated in other figures are denoted with the same reference sign differing only in the first digit.

The embodiment illustrated in Fig. 4 differs from the embodiment of the arrangement 300 illustrated in Fig. 3 in that the inner sheet 329 illustrated in Fig. 3 is not present in the embodiment illustrated in Fig. 4. A bag is, in the arrangement 400 illustrated in Fig. 4, formed by the outer sheet 435 and the support structure radially outer surface 407 which forms a resin tight barrier and which may therefore form an inner bonding material retaining structure instead of the inner sheet 329. Apart from this difference, the embodiment corresponds to the embodiment illustrated in Fig. 3.

During a manufacturing process thereby, the step of placing an inner sheet onto the auxiliary structure radially outer surface 407 may be avoided. Instead, the radially inner fiber material 431 is directly placed onto the auxiliary structure radially outer surface 407 of the auxiliary structure 403 and is then soaked or provided with resin material 437. After placing the magnet 401 into the recess 425, after placing radially outer fiber material 433 on the outer surface 423 of the permanent magnet 401 and after placing the outer sheet 435 on top of the radially outer fiber material 433 and also applying resin 437, the bag formed by the auxiliary structure radially outer surface 407 and the outer sheet 435 may be evacuated and the resin may allowed to crosslink.

The arrangement 500 for manufacturing an outer rotor illustrated in Fig. 5 is similar to the arrangement 400 illustrated in Fig. 4 except that the auxiliary structure 503 additionally comprises recesses or channels 543 between adjacent magnets and other channels 545 at circumferential positions where permanent magnets are to be placed, wherein the recesses or channels 543, 545 are formed by repressions on the auxiliary structure radially outer surface 507. The channels 543, 545 lead to a vacuum pump which may be adapted to evacuate the bag in order to remove residual air and to thus improve the joining and connection structure which eventually forms the outer rotor.

The auxiliary structure radially outer surfaces 407, 507 illustrated in Figs. 4 and 5 may be coated or pretreated (e.g. with a coating) or may comprise material (e.g. Teflon) in order to reduce sticking of the bonding material (in particular resin) to the auxiliary structure radially outer surfaces 407, 507.

Permanent magnets may have previously be encapsulated in stainless steel.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for manufacturing an outer rotor (102) for an electrical generator; the method comprising:
releasably attaching plural magnets (101) at an annular auxiliary structure (103) so that radially inner surfaces (225) of the magnets (201) are aligned to comply with an intended inner diameter (2*r0) of the rotor (102);
applying a bonding material (331,333,337) at least in contact with radially outer surfaces (323) of the magnets (201,301) and circumferentially between magnets (201,301), in order to fix the aligned magnets (201,301) in place
wherein the bonding material (331,333,337) comprises composite material including a resin (337) and fiber material (331,333),
wherein the fiber material (331,333) is applied between an auxiliary structure radially outer surface (307) and the radially inner surfaces (325) of the magnets (301) as radially inner fiber material (331),
wherein the fiber material is applied on the radially outer surfaces (323) of the magnets (301) as radially outer fiber material (333).

2. Method according to claim 1, wherein the bonding material (331,333,337) is applied such as to surround the radially outer surfaces (223,323) and the radially inner surfaces (225,325) of the magnets (201,301).

3. Method according to claim 1 or 2, wherein the fiber material (331,333) comprises glass fiber and/or carbon fiber material.

4. Method according to one of claims 1 to 3, wherein a radial position (r3) of the radially outer surfaces (223) of the magnets (201) are greater than a radial position (r2) of the auxiliary structure radially outer surface circumferentially between adjacent magnets (201).

5. Method according to one of claims 1 to 4, wherein a radial position (r1) of the radially inner surfaces (225) of the magnets (201) are smaller than a radial position (r2) of the auxiliary structure radially outer surface (207) circumferentially between adjacent magnets.

6. Method according to one of claims 1 to 5,
wherein the radially outer fiber material extends in a circumferential direction beyond the outer surface (323) of the magnets as extended radially outer fiber material (341),
wherein the radially inner fiber material extends in the circumferential direction beyond the radially inner surfaces (325) of the magnets as extended radially inner fiber material (339),
wherein the extended radially outer fiber material (341) and the extended radially inner fiber material (339) are stacked on top of each other circumferentially between adjacent magnets (301).

7. Method according to claim 6,
wherein applying the bonding material comprises:
soaking the radially outer fiber material (333), the radially inner fiber material (331) and the extended radially outer fiber material (341) stacked with the extended radially inner fiber material (339) with resin (337),
the method in particular further comprising:
crosslinking the resin (337) for solidification.

8. Method according to one of claims 1 to 7,
wherein as an outer bonding material retaining structure an outer sheet (335) is arranged on the radially outer surfaces (323) of the magnets (301), in particular on the radially outer fiber material.

9. Method according to one of claim 8,
wherein as an inner bonding material retaining structure an inner sheet (329) is arranged between the radially inner fiber material (331) and the auxiliary structure radially outer surface (307).

10. Method according to one of claim 8,
wherein the auxiliary structure radially outer surface (307) is tight for the bonding material, to form an inner bonding material retaining structure,
wherein the auxiliary structure radially outer surface in particular comprises with adhering reducing material, further in particular Teflon.

11. Method according to one of claim 1, wherein the auxiliary structure radially outer surface (507) comprises recesses or channels (543, 545) where vacuum can be applied.

12. Method according to claim 8 in combination with claim 9 or 10 to 11, wherein applying a bonding material comprises:
partially tightly joining the inner bonding material retaining structure (329) and outer bonding material retaining structure (335) to form a bag;
filling an inside of the bag with resin (337);
completely tightly joining the inner bonding material retaining structure and outer bonding material retaining structure to close the bag; and
evacuating the inside of the bag, in particular using the recesses or channels,
the method in particular further comprising:
removing the auxiliary structure (103,203,303), in particular collapsing the auxiliary structure using a hydraulic mechanism.

13. Arrangement for manufacturing an outer rotor for an electrical generator; the arrangement comprising:
an annular auxiliary structure (103,203,303) to which plural magnets (101,201,301) are releasably attachable so that radially inner surfaces (225) of the magnets (201) are aligned to comply with an intended inner diameter (2*r0) of the rotor (102,302);
a bonding material (331,333,337) comprising composite material including a resin (337) and fiber material (331,333),
the circular auxiliary structure being adapted such that the bonding material (331,333) can be applied at least in contact with radially outer surfaces (323) of the magnets (301) and circumferentially between magnets, in order to fix the aligned magnets in place,
wherein the fiber material (331,333) is applied between an auxiliary structure radially outer surface (307) and the radially inner surfaces (325) of the magnets (301) as radially inner fiber material (331),
wherein the fiber material is applied on the radially outer surfaces (323) of the magnets (301) as radially outer fiber material (333).

14. Outer rotor (102,302) for an electrical generator; the rotor comprising:
plural magnets (101,301) having radially inner surfaces (225,325) of the magnets that are annularly aligned to comply with an intended inner diameter (2 * r0) of the rotor (102,302);
a bonding material (331,333,337) applied at least in contact with radially outer surfaces (323) of the magnets (301) and circumferentially between magnets, in order to fix the aligned magnets in place,
wherein the bonding material (331,333,337) comprises composite material including a resin (337) and fiber material (331,333),
wherein the fiber material (331,333) is applied on the radially inner surfaces (325) of the magnets (301) as radially inner fiber material (331),
wherein the fiber material is applied on the radially outer surfaces (323) of the magnets (301) as radially outer fiber material (333).

## Patentansprüche

1. Verfahren zum Herstellen eines Außenrotors (102) für einen Stromgenerator, das Folgendes umfasst:
lösbares Anbringen von mehreren Magneten (101) an einer ringförmigen Hilfskonstruktion (103), so dass radial innenliegende Flächen (225) der Magneten (201) so ausgerichtet sind, dass sie einem bestimmungsgemäßen Innendurchmesser (2*r0) des Rotors (102) entsprechen,
Aufbringen eines Klebematerials (331, 333, 337) zumindest auf radial außenliegende Flächen (323) der Magneten (201, 301) und in Umfangsrichtung zwischen den Magneten (201, 301), um die ausgerichteten Magneten (201, 301) zu fixieren,
wobei das Klebematerial (331, 333, 337) Verbundmaterial einschließlich eines Harzes (337) und Fasermaterial (331, 333) umfasst,
wobei das Fasermaterial (331, 333) zwischen einer radial außenliegenden Fläche (307) der Hilfskonstruktion und den radial innenliegenden Flächen (325) der Magneten (301) als radial innenliegendes Fasermaterial (331) aufgebracht wird,
wobei das Fasermaterial als radial außenliegendes Fasermaterial (333) auf die radial außenliegenden Flächen (323) der Magneten (301) aufgebracht wird.

2. Verfahren nach Anspruch 1, bei dem das Klebematerial (331, 333, 337) so aufgebracht wird, dass es die radial außenliegenden Flächen (223, 323) und die radial innenliegenden Flächen (225, 325) der Magneten (201, 301) umgibt.

3. Verfahren nach Anspruch 1 oder 2, bei dem das Fasermaterial (331, 333) Glasfaser- und/ oder Kohlenstofffasermaterial umfasst.

4. Verfahren nach einem der Ansprüche 1 bis 3, bei dem eine radiale Position (r3) der radial außenliegenden Flächen (223) der Magneten (201) weiter außen liegt als eine radiale Position (r2) der radial außenliegenden Fläche der Hilfskonstruktion in Umfangsrichtung zwischen benachbarten Magneten (201).

5. Verfahren nach einem der Ansprüche 1 bis 4, bei dem eine radiale Position (r1) der radial innenliegenden Flächen (225) der Magneten (201) weiter innen liegt als eine radiale Position (r2) der radial außenliegenden Fläche (207) der Hilfskonstruktion in Umfangsrichtung zwischen benachbarten Magneten.

6. Verfahren nach einem der Ansprüche 1 bis 5,
bei dem das radial außenliegende Fasermaterial als verlängertes radial außenliegendes Fasermaterial (341) in Umfangsrichtung über die Außenfläche (323) der Magneten hinaus verläuft,
bei dem das radial innenliegende Fasermaterial als verlängertes radial innenliegendes Fasermaterial (339) in Umfangsrichtung über die radial innenliegenden Flächen (325) der Magneten hinaus verläuft,
bei dem das verlängerte radial außenliegende Fasermaterial (341) und das verlängerte radial innenliegende Fasermaterial (339) in Umfangsrichtung zwischen benachbarten Magneten (301) aufeinandergestapelt sind.

7. Verfahren nach Anspruch 6,
bei dem das Aufbringen des Klebematerials Folgendes umfasst:
Tränken des radial außenliegenden Fasermaterials (333), des radial innenliegenden Fasermaterials (331) und des auf das verlängerte radial innenliegende Fasermaterial (339) gestapelten verlängerten radial außenliegenden Fasermaterials (341) mit Harz (337),
wobei das Verfahren insbesondere ferner Folgendes umfasst:
Vernetzen des Harzes (337) zum Verfestigen.

8. Verfahren nach einem der Ansprüche 1 bis 7,
bei dem als außenliegende Klebematerialhaltekonstruktion eine Außenfolie (335) an den radial außenliegenden Flächen (323) der Magneten (301), insbesondere an dem radial außenliegenden Fasermaterial angeordnet ist.

9. Verfahren nach Anspruch 8,
bei dem eine Innenfolie (329) als innenliegende Klebematerialhaltekonstruktion zwischen dem radial innenliegenden Fasermaterial (331) und der radial außenliegenden Fläche (307) der Hilfskonstruktion angeordnet wird.

10. Verfahren nach Anspruch 8,
bei dem die radial außenliegende Fläche (307) der Hilfskonstruktion für das Klebematerial undurchlässig ist, so dass eine innenliegende Klebematerialhaltekonstruktion gebildet wird,
bei dem die radial außenliegende Fläche der Hilfskonstruktion insbesondere haftverminderndes Material, ferner insbesondere Teflon umfasst.

11. Verfahren nach Anspruch 1, bei dem die radial außenliegende Fläche (507) der Hilfskonstruktion Vertiefungen oder Kanäle (543, 545) umfasst, an die ein Unterdruck angelegt werden kann.

12. Verfahren nach Anspruch 8 in Kombination mit Anspruch 9 oder 10 oder 11, bei dem das Aufbringen eines Klebematerials Folgendes umfasst:
teilweise festes Verbinden der innenliegenden Klebematerialhaltekonstruktion (329) und der außenliegenden Klebematerialhaltekonstruktion (335) zum Bilden einer Tasche,
Befüllen eines Inneren der Tasche mit Harz (337),
völlig festes Verbinden der innenliegenden Klebematerialhaltekonstruktion und der außenliegenden Klebematerialhaltekonstruktion zum Verschließen der Tasche und
Evakuieren des Inneren der Tasche insbesondere unter Verwendung der Vertiefungen oder Kanäle,
wobei das Verfahren insbesondere ferner Folgendes umfasst:
Entfernen der Hilfskonstruktion (103, 203, 303), insbesondere Zusammenklappen der Hilfskonstruktion unter Verwendung eines Hydraulikmechanismus.

13. Anordnung zum Herstellen eines Außenrotors für einen Stromgenerator, die Folgendes umfasst:
eine ringförmige Hilfskonstruktion (103, 203, 303), an der sich mehrere Magneten (101, 201, 301) lösbar anbringen lassen, so dass radial innenliegende Flächen (225) der Magneten (201) so ausgerichtet sind, dass sie einem bestimmungsgemäßen Innendurchmesser (2*r0) des Rotors (102, 302) entsprechen,
ein Klebematerial (331, 333, 337), das Verbundmaterial einschließlich eines Harzes (337) und Fasermaterial (331, 333) umfasst,
wobei die kreisförmige Hilfskonstruktion so ausgelegt ist, dass das Klebematerial (331, 333) zumindest in Kontakt mit radial außenliegenden Flächen (323) der Magneten (301) und in Umfangsrichtung zwischen Magneten aufgebracht werden kann, um die ausgerichteten Magneten zu fixieren,
wobei das Fasermaterial (331, 333) zwischen einer radial außenliegenden Fläche (307) der Hilfskonstruktion und den radial innenliegenden Flächen (325) der Magneten (301) als radial innenliegendes Fasermaterial (331) aufgebracht wird,
wobei das Fasermaterial als radial außenliegendes Fasermaterial (333) auf die radial außenliegenden Flächen (323) der Magneten (301) aufgebracht wird.

14. Außenrotor (102, 302) für einen Stromgenerator, wobei der Rotor Folgendes umfasst:
mehrere Magneten (101, 301) mit radial innenliegenden Flächen (225, 325), die ringförmig so ausgerichtet sind, dass sie einem bestimmungsgemäßen Innendurchmesser (2*r0) des Rotors (102, 302) entsprechen,
ein Klebematerial (331, 333, 337), das zumindest auf radial außenliegende Flächen (323) der Magneten (301) und in Umfangsrichtung zwischen den Magneten aufgebracht ist, um die ausgerichteten Magneten zu fixieren,
wobei das Klebematerial (331, 333, 337) Verbundmaterial einschließlich eines Harzes (337) und Fasermaterial (331, 333) umfasst,
wobei das Fasermaterial (331, 333) als radial innenliegendes Fasermaterial (331) auf die radial innenliegenden Flächen (325) der Magneten (301) aufgebracht ist,
wobei das Fasermaterial als radial außenliegendes Fasermaterial (333) auf die radial außenliegenden Flächen (323) der Magneten (301) aufgebracht ist.

## Revendications

1. Un procédé de fabrication d'un rotor extérieur (102) pour un générateur électrique, le procédé comprenant:
le rattachement de manière libérable d'une pluralité d'aimants (101) au niveau d'une structure auxiliaire annulaire (103) de sorte que des surfaces radialement intérieures (225) des aimants (201) soient alignées de façon à se conformer à un diamètre intérieur prévu (2*r0) du rotor (102),
l'application d'un matériau de liaison (331, 333, 337) au moins en contact avec des surfaces radialement extérieures (323) des aimants (201, 301) et circonférentiellement entre les aimants (201, 301), de façon à fixer les aimants alignés (201, 301) en place,
dans lequel le matériau de liaison (331, 333, 337) comprend un matériau composite contenant une résine (337) et un matériau à fibres (331, 333),
dans lequel le matériau à fibres (331, 333) est appliqué entre une surface radialement extérieure (307) de la structure auxiliaire et les surfaces radialement intérieures (325) des aimants (301) sous la forme d'un matériau à fibres radialement intérieur (331),
dans lequel le matériau à fibres est appliqué sur les surfaces radialement extérieures (323) des aimants (301) sous la forme d'un matériau à fibres radialement extérieur (333).

2. Le procédé selon la revendication 1, dans lequel le matériau de liaison (331, 333, 337) est appliqué de façon à envelopper les surfaces radialement extérieures (223, 323) et les surfaces radialement intérieures (225, 325) des aimants (201, 301).

3. Le procédé selon la revendication 1 ou 2, dans lequel le matériau à fibres (331, 333) comprend un matériau à fibres de verre et/ou à fibres de carbone.

4. Le procédé selon l'une quelconque des revendications 1 à 3, dans lequel une position radiale (r3) des surfaces radialement extérieures (223) des aimants (201) est supérieure à une position radiale (r2) de la surface radialement extérieure de la structure auxiliaire circonférentiellement entre des aimants adjacents (201).

5. Le procédé selon l'une quelconque des revendications 1 à 4, dans lequel une position radiale (r1) des surfaces radialement intérieures (225) des aimants (201) est inférieure à une position radiale (r2) de la surface radialement extérieure (207) de la structure auxiliaire circonférentiellement entre des aimants adjacents.

6. Le procédé selon l'une quelconque des revendications 1 à 5,
dans lequel le matériau à fibres radialement extérieur s'étend dans une direction circonférentielle au-delà de la surface extérieure (323) des aimants sous la forme d'un matériau à fibres radialement extérieur étendu (341),
dans lequel le matériau à fibres radialement intérieur s'étend dans la direction circonférentielle au-delà des surfaces radialement intérieures (325) des aimants sous la forme d'un matériau à fibres radialement intérieur étendu (339),
dans lequel le matériau à fibres radialement extérieur étendu (341) et le matériau à fibres radialement intérieur étendu (339) sont empilés l'un sur l'autre circonférentiellement entre des aimants adjacents (301).

7. Le procédé selon la revendication 6,
dans lequel l'application du matériau de liaison comprend:
le trempage du matériau à fibres radialement extérieur (333), du matériau à fibres radialement intérieur (331) et du matériau à fibres radialement extérieur étendu (341) empilé avec le matériau à fibres radialement intérieur étendu (339) avec la résine (337),
le procédé comprenant plus particulièrement en outre:
la réticulation de la résine (337) à des fins de solidification.

8. Le procédé selon l'une quelconque des revendications 1 à 7,
dans lequel, en tant que structure de retenue de matériau de liaison extérieure, une feuille extérieure (335) est agencée sur les surfaces radialement extérieures (323) des aimants (301), plus particulièrement sur le matériau à fibres radialement extérieur.

9. Le procédé selon la revendication 8,
dans lequel, en tant que structure de retenue de matériau de liaison intérieure, une feuille intérieure (329) est agencée entre le matériau à fibres radialement intérieur (331) et la surface radialement extérieure (307). de la structure auxiliaire

10. Le procédé selon la revendication 8,
dans lequel la surface radialement extérieure (307) de la structure auxiliaire est étanche pour le matériau de liaison de façon à former une structure de retenue de matériau de liaison intérieure,
dans lequel la surface radialement extérieure de la structure auxiliaire comprend plus particulièrement l'adhésion d'un matériau réducteur, plus particulièrement en outre du Téflon.

11. Le procédé selon la revendication 1, dans lequel la surface radialement extérieure (507) de la structure auxiliaire comprend des évidements ou des canaux (543, 545) dans lesquels un vide peut être appliqué.

12. Le procédé selon la revendication 8, en combinaison avec les revendications 9 ou 10 à 11, dans lequel l'application d'un matériau de liaison comprend:
le raccordement de manière partiellement étanche de la structure de retenue de matériau de liaison intérieure (329) et de la structure de retenue de matériau de liaison extérieure (335) de façon à former un sac,
le remplissage d'un intérieur du sac avec la résine (337),
le raccordement de manière totalement étanche de la structure de retenue de matériau de liaison intérieure et de la structure de retenue de matériau de liaison extérieure de façon à refermer le sac, et
l'évacuation de l'intérieur du sac, plus particulièrement au moyen des évidements ou des canaux,
le procédé comprenant plus particulièrement en outre:
le retrait de la structure auxiliaire (103, 203, 303), plus particulièrement le rabattage de la structure auxiliaire au moyen d'un mécanisme hydraulique.

13. Un agencement de fabrication d'un rotor extérieur pour un générateur électrique, l'agencement comprenant :
une structure auxiliaire annulaire (103, 203, 303) à laquelle une pluralité d'aimants (101, 201, 301) sont rattachables de manière libérable de sorte que des surfaces radialement intérieures (225) des aimants (201) soient alignées de façon à se conformer à un diamètre intérieur prévu (2*r0) du rotor (102, 302),
un matériau de liaison (331, 333, 337) comprenant un matériau composite contenant une résine (337) et un matériau à fibres (331, 333),
la structure auxiliaire circulaire étant adaptée de sorte que le matériau de liaison (331, 333) puisse être appliqué au moins en contact avec des surfaces radialement extérieures (323) des aimants (301) et circonférentiellement entre les aimants, de façon à fixer les aimants alignés en place,
dans lequel le matériau à fibres (331, 333) est appliqué entre une surface radialement extérieure (307) de la structure auxiliaire et les surfaces radialement intérieures (325) des aimants (301) sous la forme d'un matériau à fibres radialement intérieur (331),
dans lequel le matériau à fibres est appliqué sur les surfaces radialement extérieures (323) des aimants (301) sous la forme d'un matériau à fibres radialement extérieur (333).

14. Un rotor extérieur (102, 302) destiné à un générateur électrique, le rotor comprenant :
une pluralité d'aimants (101, 301) possédant des surfaces radialement intérieures (225, 325) des aimants qui sont alignés de manière annulaire de façon à se conformer à un diamètre intérieur prévu (2*r0) du rotor (102, 302),
un matériau de liaison (331, 333, 337) appliqué au moins en contact avec des surfaces radialement extérieures (323) des aimants (301) et circonférentiellement entre les aimants, de façon à fixer les aimants alignés en place,
dans lequel le matériau de liaison (331, 333, 337) comprend un matériau composite contenant une résine (337) et un matériau à fibres (331, 333),
dans lequel le matériau à fibres (331, 333) est appliqué sur les surfaces radialement intérieures (325) des aimants (301) sous la forme d'un matériau à fibres radialement intérieur (331),
dans lequel le matériau à fibres est appliqué sur les surfaces radialement extérieures (323) des aimants (301) sous la forme d'un matériau à fibres radialement extérieur (333).
